# EUROPEAN PATENT SPECIFICATION

(11) **EP 2 150 134 B1**
(45) Date of publication and mention of the grant of the patent: **06.01.2016**
(21) Application number: 08758700.2
(22) Date of filing: 23.05.2008
(51) Int. Cl.: A23N 7/00, A23N 15/08

(54) **DEVICE FOR THE TREATMENT OF BULBS**
VORRICHTUNG ZUR BEARBEITUNG VON ZWIEBELN
DISPOSITIF POUR LE TRAITEMENT DE BULBES

(30) Priority: 29.05.2007 NL 1033899
(43) Date of publication of application: 10.02.2010
(73) Proprietor: Sormac B.V., 5916 PN Venlo (NL)
(72) Inventor: JACOBS, Hendrikus, Wilhelmina, Maria, 5993 ES Maasbree (NL); VAN OCH, Wilhelmus, Reginald, Gerardus, Cornelus, 5953 EP Reuver (NL)
(74) Representative: Algemeen Octrooi- en Merkenbureau B.V.
(86) International application number: PCT/EP2008/004101
(87) International publication number: WO 2008/145300

(56) References cited:
- WO-A-2004/014160
- NL-C1- 1 028 752
- US-A- 4 732 771

## Description

The invention relates to a device for peeling an onion like product having a top end portion and a tail end portion interconnected by an axis, comprising a transport track for transporting the onion like product in a oriented position, first cutting means for removing the top end portion and the tail end portion, second cutting means for the incision of the circumferential portion of the onion like product, the incision being positioned in a plane containing the axis of the onion like product, which second cutting containing a number of knife-edges which are mounted on two pairs of arms, a first pair for the incision of the leading part of the onion like product and a second pair for the incision of the tailing part of the onion like product, one arm of each pair being located at each side of the transport track.

Such a device is known from WO-A-2004/014160.

In this known device the two pair of arms are driven and controlled independently from each other, in order to obtain a correct incision of the onion like product.

It is an object of the invention to provide a device, according to one or several of the following claims, of the above mentioned type in which the control of the movements of the two pair of arms is performed in a simple way.

This object is obtained in that each arm of the pair for the leading part of the circumference is connected to the corresponding arm of the pair for the tailing part, and each arm of the first pair is urged in the direction of the transport track by means of a spring like element.

Other characteristics and advantages of the invention will become clear from the following description of an embodiment, reference being made to the annexed drawings.

In the drawings is:
- Figure 1: a schematic side view of a device according to the invention,
- Figure 2: a schematic top view of the device according of figure 1,
- Figure 3: a schematic top view of a part of the device with two pair of cutting arms,
- Figures 4A, 4B, 4C, 4D, 4E and 4F: schematic representations of the cinematic movement of the cutting arms, and

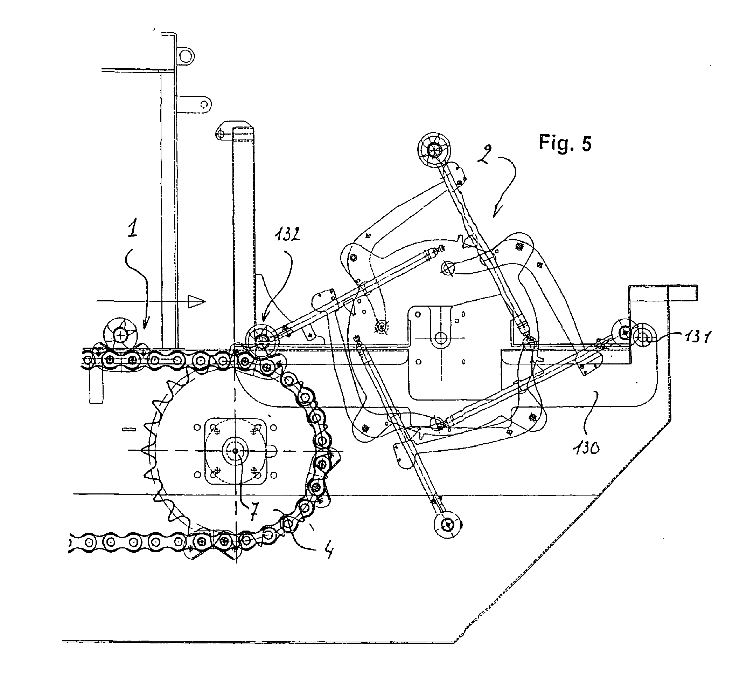

- Figure 5: A schematic representation in side view on a larger scale of a part of the transition between the first and second transport system.

For a number of aspects of the device according to the invention reference is made to WO-2004/014160.

In the following description the word onion is used, but it will be clear that by onion is meant any onion like product such as flower bulbs and the like.

In order to define the orientation of an onion it is important to identify the main characteristics of an onion. An onion generally has the shape of a ball with a tail by means of which the onion was connected to the plant. Substantially diametrically opposite the tail there is a top. The line connecting the top with the tail will be called the main axis of the onion and the other directions can be directly derived from this direction.

The device for cleaning and handling the onion in order to make the same ready for consumption is composed substantially of two transport systems, a first transport system 1 in which some parts of the onion are cut away from the onion and some incisions will be made in the outer surface of the onion, and a second transport system 2 in which further incisions will be made in the outer layer of the onion and this outer layer or layers will be blown away.

As shown in the drawings the device comprises a frame on which the transport systems 1 and 2 have been mounted, which frame will not be described as it is obvious for the man skilled in the art how this can be made.

The transport system 1 comprises a chain 3 which runs over a number of chain wheels 4, 5 and 6, the axis 7 of the chain wheel 4 can be driven. The path of movement of the chain 3 comprises a substantially horizontal part composed of a part 10 and a part 11. The chain 3 carries a number of gondola supports 12 which are of the same type as described in WO-A-2004/014160 and on which the onions can be placed and transported through the parts 10 and 11 of the upper part of the chain 3. Basically each gondola support comprises two parallel small plates which are mounted at both sides of the chain 3.

The supply of the onions to the gondola supports can be done by hand in which case it is important that the onions are immediately positioned in the right orientation. The right orientation means that the main axis of the onion is oriented in a direction which is perpendicular to the plane of the chain wheels 4, 5 and 6. In a more automated embodiment of the device the onions can be supplied through a transporter 14, which may be of the type described in NL-A-1028512, in which the onions are supplied one by one at the right speed such that each time one onion is placed in a gondola support. Subsequently the onions can be directed by hand in the right orientation as defined above. At last it is also possible to bring the onions in the gondola supports in the right orientation by using a device as described in NL-B-1025386.

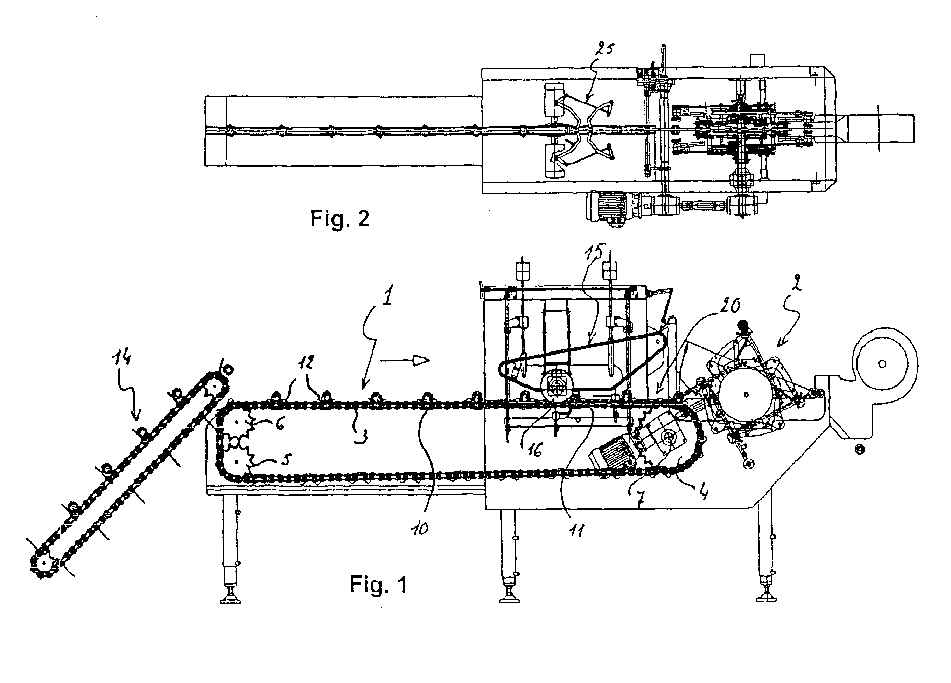

The distance between the small plates of each gondola support 12 is chosen in such a way that when the onion is in a oriented position in the gondola support 12, the top and the tail are extending outside the respective sides of the gondola support 12. Once the onion is positioned in this way in the gondola support, its orientation will not be changed during the further transport during which the onion is moving to the right hand side as seen in Figure 1.

In the treatment zone 11 there is provided a system 15 for holding the onions in the gondola supports 12 while the top and the tail of the onion are cut by means of two circular knives 16 which are placed at both sides of the transport system 1. The details of the holding system 15 and the knives 6 will not be described in more detail. One embodiment has been described in WO-A-2004/014160 mentioned above and that embodiment can as such be used in the device described here, the required modifications being obvious for the man skilled in the art.

In the embodiment shown there is used a chain which is mounted on a frame which is mounted in an articulated way.

In the treatment zone there is also provided a system to incise almost completely the circumference of the onions on the gondola supports according to a line lying in a plane which contains the main axis of the onion. In the embodiment of the invention shown this plane is parallel to the upper part of the first transport system 1 which in practice coincides with the horizontal plane. The main characteristics of the system 25 which is used therefore is as described in WO-A-2004/014160.

The system 25 is composed of two cutting systems, a first cutting system 105 which makes an incision on the leading part of the outer surface of the onion on the gondola support 12 which passes along the system 105 and a second cutting system 106 which makes an incision on the tailing part of the outer surface of the onion on the gondola support 12 passing the system 106.

The first cutting system 105 comprises a first knife 90 which is mounted close to the end part of a rod 91 which is rotatably mounted on an axis 93 which is connected to the frame of the device. The rod 91 is connected to a spring system (not shown) which urges the end part of the rod 91 carrying the knife 90 in a direction which is opposite to the direction of movement of the onions in the first transport system.

A stop, not shown, keeps the rod 91 in such a position that the knife is almost at the height of the longitudinal axis of the first transport system 1.

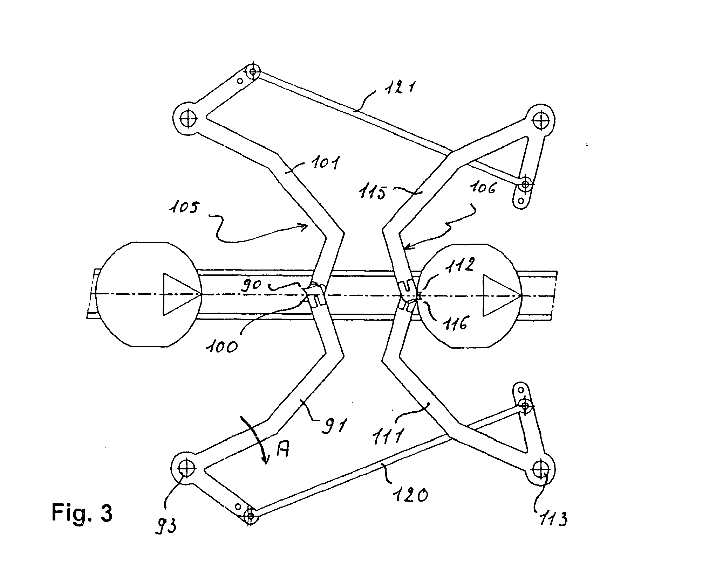

The height of the knife 90 is adjusted such that it almost coincides with the largest dimension of the onion as seen along the direction of movement of the onions in the first transport system 1.
During operation an onion on the gondola support is pressed by the transport system 1 against the knife 90 and the outer layer of the onion will be incised. During the further movement of the onion the rod 91 will be urged in the direction of the arrow A in Figure 3 and the knife will move along the outer surface of the onion, whereby an incision will be made in the outer layer or peel of the onion. This cutting operation of the knife 90 is continuing until the knife has reached a position which corresponds substantially to the main axis of the onion.

The first cutting system 105 contains also a second knife 100 which is in a mirror symmetrical position with respect to the knife 90, with the exception that it is located on a slightly different horizontal level. A shown the two knives 90 and 100 are located in the rest position at both sides of the longitudinal axis of the first transport system such that a leading incision is made in the leading part of a transported onion.

By means of the first cutting system an incision is made in the outer layer of the transported onion extending from one end of the main axis to the other end of the main axis of the onion.

The second cutting system 106 comprises a knife 112 which is mounted on the end part of an arm 111 which is rotatable around an axis 113. Furthermore the knife is oriented in such a way that it operates on the tailing face of an onion passing by. A second knife 116 with corresponding arm is mirror symmetrically mounted with respect to the knife 113 and arm 111, as seen with respect to the longitudinal axis of the first transport system 1.

A rod 120 is connecting in an articulating way the arm 111 with the rod 91 and in the same way the arm 115 is connected to the rod 101 by means of a rod 121. The shape of the rods 91, 101, the arms 111, 115 and the position of the different rotation points are selected in such a way that a movement of the arms 91, 101 is converted in a controlled movement of the arms 111, 115. This movement is such (see Figure 3) that at the moment that an onion has passed the first cutting system, the knives 112 and 116 are touching the onion at the height of the main axis of the onion passing along and from that moment on are taking over the cutting of the knives 90 and 100. This is possible because at that moment the top and the tail of the onion have already been removed and the knives 90, 100 and 112, 116 can slide over the flat end portions of the onion and as such can take over the cutting operation from each other. During the further movement of the onion the knives 112, 116 will incise the tailing face of the onion whereby almost the complete circumference of the onion will be incised. Here the spring system connected to the rods 91 and 101 will control the movement of the arms 111 and 115 in combination with the contact between the arms 111 and 115 and the tailing face of the onion.

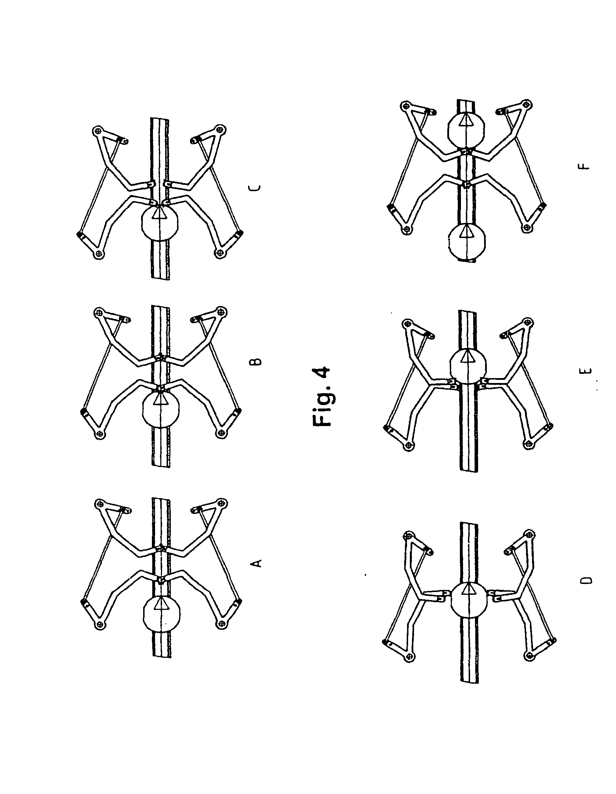

The different phases of the cutting process are clearly shown in Figure 4.

After the onion has left the treatment station 11, it arrives in a part 20 where the onion is transferred to the second transport system 2. The second transport system substantially corresponds to the second transport system described in WO-A-2004/014160 and for more details reference is made to that publication.

The basic difference with respect to the second transport system 2 already described before is that in this embodiment the second transport system 2 is mounted in a subframe 130 which is connected to the main frame of the device according to the invention in an articulating way through an axis 131. The axis 131 is as far as possible removed from the plate 132 where the gripping arms of the second transport system 2 are taking over the onions from the first transport system 1.

In practice it has been found that onions have not always the same diameter. This variation in the diameter results in a change of the position where the gripping arms of the second transport system 2 will contact the onion. It remains however important that the contact between the gripping arms of the second transport system and the onion are as close as possible to the main axis of the onion.

In order to obtain such a situation the moment that the onion is gripped can be defined as a function of the diameter of the onion. In this way the horizontal position with respect to the main axis of the onion can be controlled. In order to reach the right vertical position the subframe 130 can be rotated around the axis 131. As the distance between the axis 131 and the transfer point is relatively large, such a rotational movement is almost equal to a linear vertical movement of the gripping point. At the same time the vertical deviation which results from the relative movements of the first and second transport system and the variation as a result of the adjustment of the movement of the gripping arms can be compensated.

In this way it is possible to optimize the transfer of the onion from the first to the second transport system based upon the detection of the diameter of the onion.

In the second transport system 2 the onion is rotated around its main axis and will be provided with an incision by means of a knife mounted on an arm, which incision will extend along the circumference in a plane which is perpendicular to the main axis of the onion. The outer skin of the onion is, as a result of the incision made in the first transport system 1 and the incision made in the second transport system, separated in four parts which can easily removed from the central part of the onion for instance by means of pressurized air which is supplied through openings in the vicinity of the knives on the arms in the second transport system. The peeled onion remains in the system and can be discharged in a controlled way for further treatment.

When there is no onion between the gripping arms then the blowing away by means of pressurized air is superfluous and is even unwanted, as on the one side it means a loss of pressurized air, but on the other hand it is a source of annoying noise.

Therefore in the total system there is provided a detector which detects whether the gripping arms really has taken over an onion from the first transport system. If this is not true than the supply of pressurized air to the corresponding arm with knife will be interrupted during one revolution of the second transport system.

It is obvious that the invention is not restricted to the described and shown embodiments, but that within the formulation of the claims modifications can be applied which are part of this invention.

## Claims

1. A device for peeling an onion like product having a top end portion and a tail end portion interconnected by an axis, comprising a transport track (1) for transporting the onion like product in a oriented position, first cutting means (16) for removing the top end portion and the tail end portion, second cutting means (25) for the incision of the circumferential portion of the onion like product, the incision being positioned in a plane containing the axis of the onion like product, said second cutting means (25) comprising a number of knife-edges (90, 100, 112, 116) which are mounted on two pairs of arms (91, 101, 111, 115) a first pair (91, 101) for the incision of the leading part of the onion like product and second pair (111, 115) for the incision of the tailing part of the onion like product **characterized in that** one arm of each pair is located at each side of the transport track each arm of the pair (91, 101) for the leading part of the onion like product is connected to the corresponding arm of the pair (111, 115) for the tailing part, and a spring like element is connected to the first pair of arms, such that each arm of the first pair is urged in the direction of the transport track.

2. A device according to claim 1, **characterized in that** the connection between the respective arms of the first and the second pair is such that the arms of the second pair are pressed by means of spring elements of the first pair or reversed against the tailing circumferential part of the onion like product.

3. A device according to claim 1 or 2, in which apart from the transport track (1) a second transport system (2) provided which includes: parallel discs by means of which an onion like product is kept and transported; means for controlling the distance between the discs; cutting elements which can incise a circumferential part of the onion like product according to a plane which is perpendicular to the main axis of the onion like product; means for rotatably driving the pair of discs, the cutting element being mounted on an arm; and, in the neighbourhood of the cutting element, an opening for the supply of pressurized air, **characterized in that** it further includes means for detecting the presence of an onion like product between the pair of discs, and means to interrupt the supply of pressurized air if no onion like product is present between the pair of discs.

4. A device according to claim 3, in which the transfer of an onion like product to the second transport system can be controlled in dependency of the diameter of the onion like product.

5. A device according to claim 3 or 4, **characterized in that** the second transport system (2) is mounted on a subframe (130) mounted in an articulating manner with respect to the frame of the transport track, and **in that** means are provided to adjust the angular position of the subframe with respect to the frame in dependency of the diameter of the onion like product.

## Patentansprüche

1. Vorrichtung zum Häuten eines zwiebelartigen Produkts, das einen oberen Endteil und einen unteren Endteil, die durch eine Sprossachse miteinander verbunden sind, besitzt, welche einen Stetigförderer (1) zum Transportieren des zwiebelartigen Produkts in einer ausgerichteten Position, ein erstes Schneidmittel (16) für das Entfernen von oberem und unterem Endteil und ein zweites Schneidmittel (25) für das Einschneiden des umfänglichen Teils des zwiebelartigen Produkts umfasst, wobei der Einschnitt in einer Ebene angebracht wird, welche die Sprossachse des zwiebelartigen Produkts enthält, und das zweite Schneidmittel (25) eine Anzahl von Messerschneiden (90, 100, 112, 116) umfasst, die an zwei Paaren von Armen (91, 101, 111, 115), einem ersten Paar (91, 101) für das Einschneiden des oberen Teils des zwiebelartigen Produkts und einem zweiten Paar (111, 115) für das Einschneiden des unteren Teils des zwiebelartigen Produkts, befestigt sind, **dadurch gekennzeichnet, dass** jeweils ein Arm jedes Paars sich auf einer Seite des Stetigförderers befindet, jeder Arm des Paars (91, 101) für den oberen Teil des zwiebelartigen Produkts mit dem entsprechenden Arm des Paars (111, 115) für den unteren Teil verbunden ist und ein Federelement mit dem ersten Armpaar derart verbunden ist, dass jeder Arm des ersten Paars in die Richtung des Stetigförderers bewegt wird.

2. Vorrichtung nach Anspruch 1, **dadurch gekennzeichnet, dass** die Verbindung zwischen den jeweiligen Armen des ersten und des zweiten Paars derart ist, dass die Arme des zweiten Paars von den Federelementen des ersten Paars gedrückt oder zu dem umfänglichen unteren Teil des zwiebelartigen Produkts zurückgeschickt werden.

3. Vorrichtung nach Anspruch 1 oder 2, bei welcher außer dem Stetigförderer (1) ein zweites Fördersystem (2) vorgesehen ist, welches parallele Scheiben, von welchen das zwiebelartige Produkt gehalten und transportiert wird, Mittel zum Einstellen des Abstands zwischen den Scheiben, Schneidelemente, die einen umfänglichen Teil des zwiebelartigen Produkts in einer Ebene, die senkrecht zur Hauptachse des zwiebelartigen Produkts steht, einschneiden können, und Mittel für den rotierenden Antrieb des Scheibenpaars umfasst, wobei das Schneidelement an einem Arm befestigt ist und sich in der Nähe des Schneidelements eine Öffnung für die Zufuhr von Druckluft befindet, **dadurch gekennzeichnet, dass** sie ferner Mittel zum Feststellen des Vorhandenseins des zwiebelartigen Produkts zwischen dem Scheibenpaar und Mittel zum Unterbrechen der Druckluftzufuhr, wenn sich kein zwiebelartiges Produkt zwischen dem Scheibenpaar befindet, umfasst.

4. Vorrichtung nach Anspruch 3, bei welcher die Übergabe des zwiebelartigen Produkts auf das zweite Fördersystem in Abhängigkeit vom Durchmesser des zwiebelartigen Produkts geregelt wird.

5. Vorrichtung nach Anspruch 3 oder 4, **dadurch gekennzeichnet, dass** das zweite Fördersystem (2) auf einem Zwischengestell (130), das in Bezug auf das Gestell des Stetigförderers gelenkig angebracht ist, befestigt ist, **und dass** Mittel zur Einstellung der Winkelposition des Zwischengestells in Bezug auf das Gestell in Abhängigkeit vom Durchmesser des zwiebelartigen Produkts vorgesehen sind.

## Revendications

1. Dispositif pour peler un produit de type oignon ayant une portion d'extrémité de dessus et une portion d'extrémité de queue reliées par un axe, comprenant un rail de transport (1) pour transporter le produit de type oignon dans une position orientée, un premier moyen de coupe (16) pour retirer la portion d'extrémité de dessus et la portion d'extrémité de queue, un second moyen de coupe (25) pour l'incision de la portion circonférentielle du produit de type oignon, l'incision étant positionnée dans un plan contenant l'axe du produit de type oignon, ledit second moyen de coupe (25) comprenant un certain nombre d'arêtes tranchantes (90, 100, 112, 116) qui sont montées sur deux paires de bras (91 101, 111, 115), une première paire (91, 101) pour l'incision de la partie avant du produit de type oignon et une seconde paire (111, 115) pour l'incision de la partie de queue du produit de type oignon, **caractérisé en ce qu'**un bras de chaque paire est situé de chaque côté du rail de transport, chaque bras de la paire (91, 101) de la partie avant du produit de type oignon est raccordé au bras correspondant de la paire (111, 115) de la partie de queue, et un élément de type ressort est raccordé à la première paire de bras, de sorte que chaque bras de la première paire soit poussé dans la direction du rail de transport.

2. Dispositif selon la revendication 1, **caractérisé en ce que** le raccordement entre les bras respectifs de la première et de la seconde paire est tel que les bras de la seconde paire sont pressés au moyen d'éléments de ressort de la première paire ou inversés contre la partie circonférentielle de coupe du produit de type oignon.

3. Dispositif selon la revendication 1 ou 2, dans lequel à l'écart du rail de transport (1) est prévu un second système de transport (2) qui comporte: des disques parallèles au moyen desquels un produit de type oignon est conservé et transporté; un moyen de régulation de la distance entre les disques, des éléments de coupe qui peuvent inciser une partie circonférentielle du produit de type oignon selon un plan qui est perpendiculaire à l'axe principal du produit de type oignon; un moyen d'entraînement rotatif de la paire de disques, l'élément de coupe étant monté sur un bras; et, à proximité de l'élément de coupe, une ouverture pour l'alimentation en air pressurisé, **caractérisé en ce qu'**il comporte en outre un moyen de détection de présence d'un produit de type oignon entre la paire de disques, et un moyen d'interruption de l'alimentation en air pressurisé si aucun produit de type oignon n'est présent entre la paire de disques.

4. Dispositif selon la revendication 3, dans lequel le transfert d'un produit de type oignon vers le second système de transport peut être régulé selon le diamètre du produit de type oignon.

5. Dispositif selon la revendication 3 ou 4, **caractérisé en ce que** le second système de transport (2) est monté sur un sous-châssis (130) monté de façon articulée par rapport au châssis du rail de transport, et **en ce que** des moyens sont prévus pour ajuster la position angulaire du sous-châssis par rapport au châssis selon le diamètre du produit de type oignon.
